# EUROPEAN PATENT APPLICATION

(11) **EP 4 687 218 A1**
(43) Date of publication of application: **04.02.2026**
(21) Application number: 25191848.8
(22) Date of filing: 25.07.2025
(51) Int. Cl.: H01Q 1/32, H01Q 1/52, B60R 11/04, B60R 11/00, H01Q 1/12

(54) **FIN FOR A VEHICLE**

(30) Priority: 29.07.2024 IT 202400017620
(71) Applicant: FERRARI S.p.A., 41100 Modena (IT)
(72) Inventor: ROSSI, Federico, 41100 MODENA (IT); BASSO, Adriano, 41100 MODENA (IT); BREVEGLIERI, Luca, 41100 MODENA (IT); CUOGHI, Alessandro, 41100 MODENA (IT)
(74) Representative: Studio Torta S.p.A.

(57) **Abstract**

A fin (7) with a shell (9) that is hollow inside configured to be fixed, in use, to the outside of a bodywork (4) of a vehicle (1); the fin (7) having an antenna (18), in particular a SDARS antenna (18), and a camera (19) installed inside the shell (9).

## Description

### CROSS-REFERENCE TO RELATED APPLICATIONS

This patent application claims priority from Italian patent application no. 102024000017620 filed on July 29, 2024, the entire disclosure of which is incorporated herein by reference.

### TECHNICAL FIELD

The invention concerns an improved fin for a vehicle.

### PRIOR ART

It is well known that a vehicle comprises an antenna usually integrated inside a fin, which protrudes outside the bodywork, generally near the rear roof area.

Known fins are sealed, waterproof bodies that house an antenna inside. For example, it is known to house a radio antenna inside the fin, for example an SDARS satellite antenna, in the US market.

### DESCRIPTION OF THE INVENTION

The purpose of this invention is to provide an improved fin in order to improve the aesthetics and functionality of the vehicle.

According to this invention, a fin, as described in the attached claims, is provided.

The dependent claims define particular embodiments of the invention.

### BRIEF DESCRIPTION OF THE DRAWINGS

Below, embodiments of the invention are described to better understand the same by way of non-limiting example and with reference to the attached drawings in which:
- Figure 1 is a schematic view, with parts removed for clarity, of a vehicle according to this invention;
- Figure 2 is a side view of a fin according to this invention;
- Figure 3 is a front perspective view of the fin in Figure 2;
- Figure 4 is a rear perspective view of the fin in Figure 2;
- Figure 5 is a longitudinal cross section of the fin in Figure 2;
- Figure 6 is an exploded view of the fin in Figure 2;
- Figure 7 is a view from below of the fin in Figure 2.

### EMBODIMENTS OF THE INVENTION

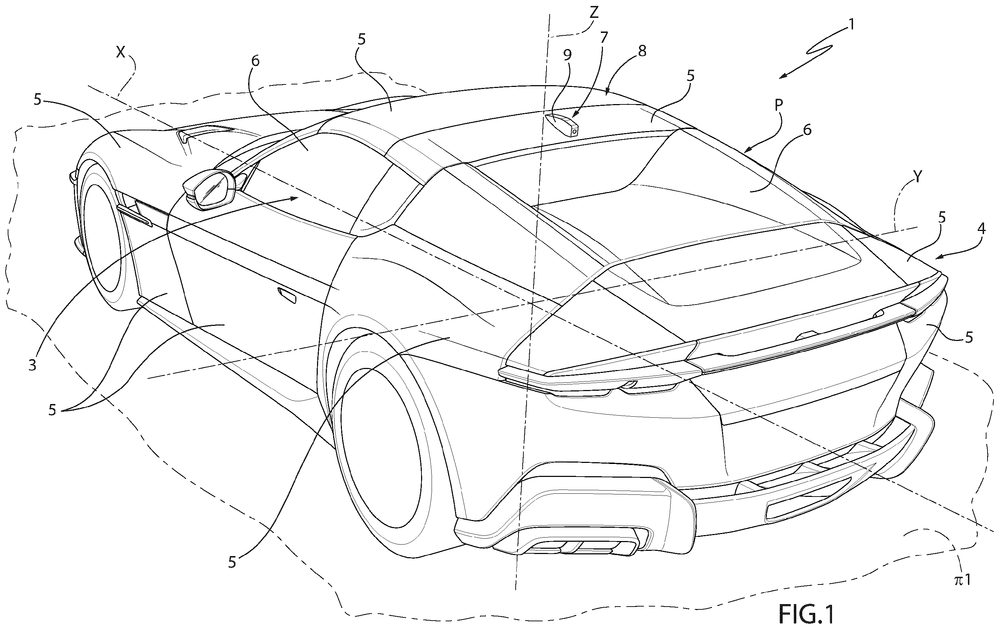

In Figure 1, reference number 1 is used to denote, as a whole, a vehicle comprising, in a known manner: a supporting structure 2 (for example, a frame and/or chassis), which defines a passenger compartment 3 configured to accommodate at least one driver and possibly one or more passengers; and a bodywork 4, which externally covers the supporting structure and is attached, in a known manner not illustrated, to the supporting structure 2.

The vehicle 1 is roto-translating, in a known manner, on a support plane π1. The terms "front", "rear", "right", "left", "top", "bottom" and the like are used with reference to the vehicle 1 moving forward on the support plane π1 in the forward direction v. The terms "external", "internal" and the like are used with reference to the passenger compartment in which the driver of the vehicle 1 is seated while driving.

The vehicle 1 has: a longitudinal axis X, generally called the roll axis; a transversal axis Y, generally called the pitch axis; and a vertical axis Z, generally called the yaw axis.

In a known manner, the bodywork 4 comprises, in turn, a plurality of exterior panels 5 and windows 6 (of a known type illustrated schematically) suitably shaped to form the aerodynamic profile P (stylised in Figure 1) and, as a whole, the aesthetic appearance of the vehicle 1.

The term panel 5 refers to a body that covers a portion of the supporting structure 2. A panel 5 may be a laminar body. A panel 5 may be a thin body with a reduced thickness relative to its width and/or height. Each panel 5 has an outer surface s1, facing the outside of the vehicle 1, and an inner surface s2, which is configured to facilitate the attachment of the panel 5 to the supporting structure 2 and the housing of any internal components of the vehicle 1.

The vehicle 1 also comprises a fin 7 that is attached to the bodywork 4. According to the illustrated example, the fin 7 is fixed at the rear of a panel 5 forming the roof 8 of the vehicle 1. According to the example shown in Figure 1, fin 7 is preferably placed above the rear window 6.

The fin 7 is preferably an axisymmetric body positioned so that its plane of symmetry is: coplanar to the longitudinal axis X of the vehicle 1 and substantially perpendicular to the support plane π1. In the following, the longitudinal axis X of the vehicle 1 is also regarded as the longitudinal axis X of reference of the fin 7.

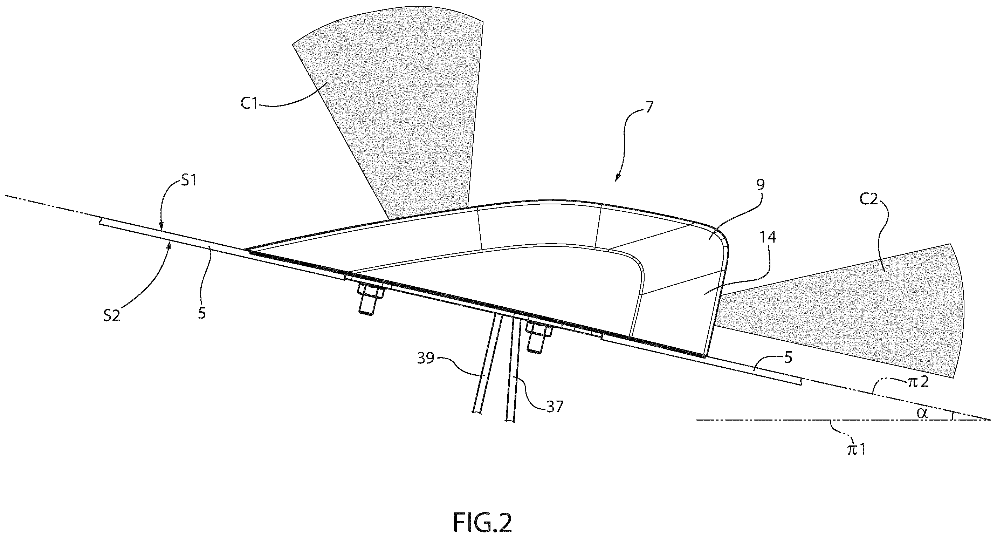

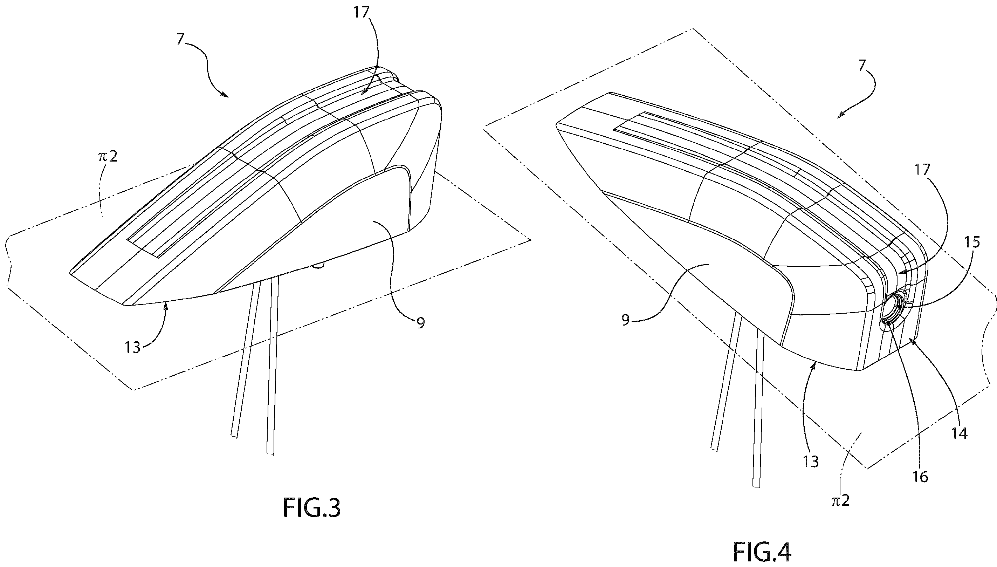

As illustrated in more detail in Figures 2 to 5, the fin 7 comprises an internally hollow shell 9 that delimits an inner housing 10. The shape and size of the shell 9 are variable. The shell 9 consists of a single piece (for example, is made by moulding, casting, die-casting, etc.).

The shape and size of the shell 9 are variable. The shell 9 consists of a single piece. The shell 9 comprises, in turn, one or more anchoring elements 11 that protrude inside the housing 10 and are configured to secure the shell 9 to the bodywork. For example, without loss of generality, the shell 9 is bolted to the bodywork 4; according to variants not illustrated, the shell 9 can be attached differently, for example, it can be mounted by interlocking, riveting or the like.

The housing 10 of the shell 9 faces outwards through an opening 12 laterally delimited by an edge 13 lying on a plane π2.

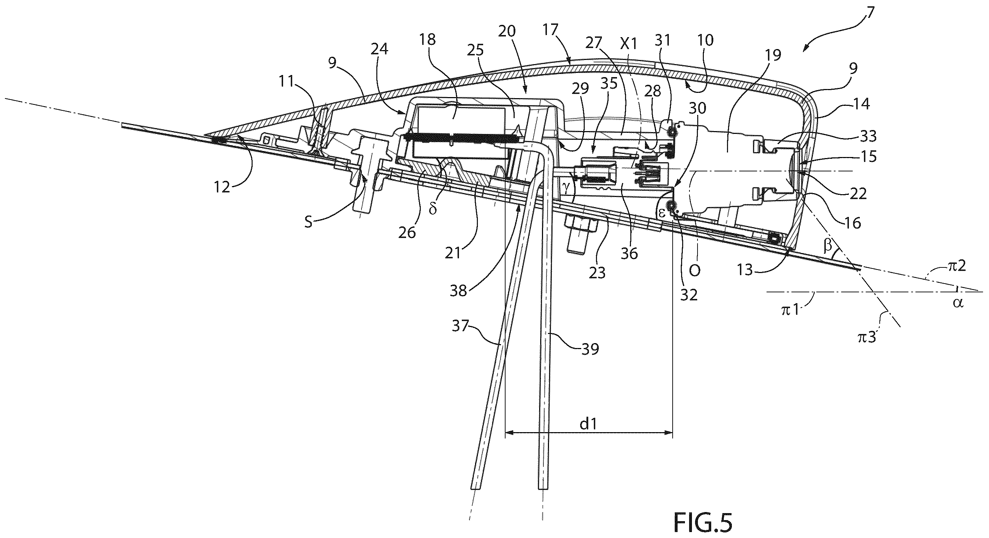

In use, the shell 9 is fixed to the bodywork 4 so that the plane π2 is inclined at an angle α to the support plane π1 of the vehicle 1 (Figures 2 and 5). The angle α is determined by the profile P and the dimensions of the vehicle 1 (in order to optimise the field of view C2 of a camera 19), as will be explained in more detail below.

The shell 9 has a rear wall 14. According to the example illustrated, the rear wall 14 is perpendicular to the plane π2 and has a through-hole 15 connecting the housing 10 with the outside. According to the example illustrated, the hole 15 has a circular cross section. The shape and size of the hole 15 are variable.

Advantageously, the fin 7 also comprises a correction element 16, which is placed in the vicinity of the hole 15. The correction element 16 is inclined towards the inside of the housing 10 by a determined angle β, as will be illustrated in more detail below. According to the example illustrated, the correction element 16 is a flap that laterally delimits the hole 15.

According to the example illustrated, the shell 9 has a groove 17 on the outside, which starts at the hole 15 and extends longitudinally along the outside of the shell 9. The shape and size of the groove 17 are variable. Advantageously, the groove 17 aesthetically camouflages the inclination of the flap 16 with respect to the rear wall 14, making the aesthetic shape of the shell 9 harmonious. The shape and size of the groove 17 are variable.

In addition, the fin 7 comprises an antenna 18 and a camera 19, which are housed inside the fin 7, as will be explained in more detail below. The antenna 18 and camera 19 are known and illustrated schematically.

Advantageously, the fin 7 also comprises a support 20 arranged within the housing 10. A part of the support 20 is shaped to delimit a watertight chamber 21 in which the antenna 18 is housed.

The camera 19 is placed inside the housing 10 of the shell 9, outside the chamber 21.

The camera 19 is positioned at a distance d1 from the antenna 18 along the longitudinal axis X. The distance d1 is determined so as to prevent electromagnetic interference between the antenna 18 and the camera 19.

The camera 19 comprises, in a known and schematically illustrated manner, a lens 22. The camera 19 is positioned so that the lens 22 faces outwards through the hole 15.

Advantageously, the lens 22 has an optical axis O inclined at an angle γ to the plane π2. The angle γ is determined as a function of the profile P and the dimensions of the vehicle 1, so as to allow the best view of the area behind the vehicle 1.

Advantageously, the support 20 is configured to position the camera 19 inside the housing 10, at the distance d1 and with the determined inclination γ.

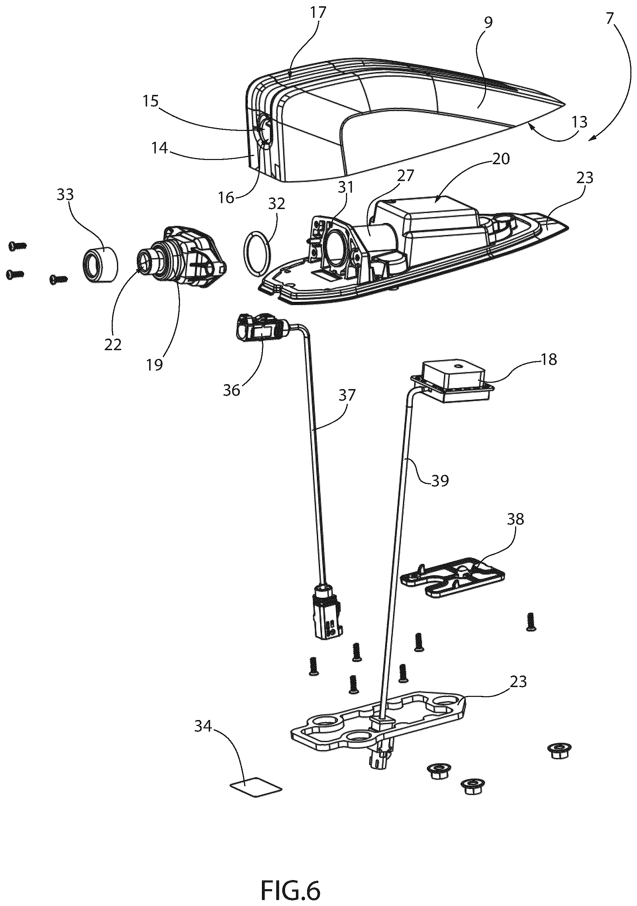

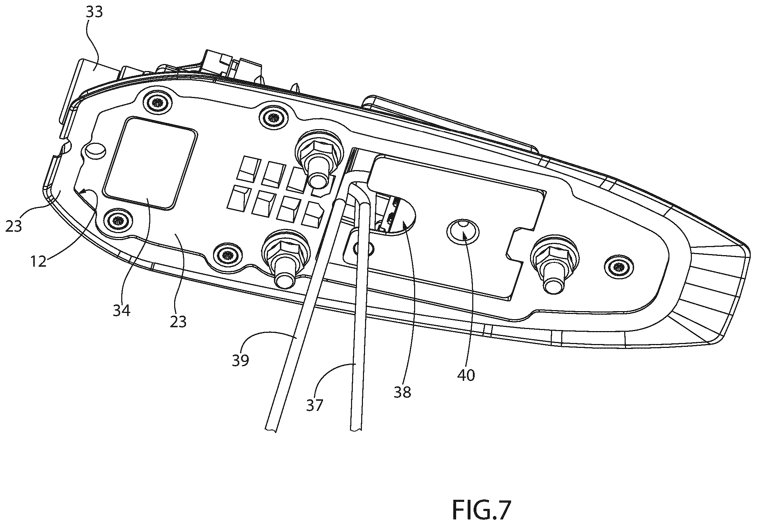

According to the example illustrated in Figures 5 to 7, the support 20 comprises a base 23 (which is a flat body) that has, in plan view, a shape complementing the shape of the edge 13 of the shell 9. The base 23 is configured to form a shape coupling with the edge 13 and fit inside the edge 13 to close the opening 12. The base 23 can be made from a single body or by joining several parts; according to the example illustrated, it is made by joining two parts that fit together.

The support 20 is articulated and made of polymeric material, for example by means of moulding. The support 20 comprises, in particular, a box-shaped portion 24 with a cavity 25; the box-shaped portion 24 has a lower opening 26 that connects the cavity 25 with the outside. The cavity 25 forms the chamber 21, which houses the antenna 18. The support 20 also comprises a lid 26 that closes the opening 26. The lid 26 is attached to the box-shaped portion 24 in a releasable manner so that the cavity 25 can be selectively opened/closed.

Advantageously, the lid 26 comprises a thrust element 40 that protrudes into the cavity 25. The thrust element 40 is configured to fix the antenna 18 into a given position within the cavity 25. Advantageously, the antenna 18 is inclined at a determined angle δ with respect to the support plane π1. The extension of the thrust element 25 binds the antenna 18 transversely to the longitudinal axis X and fixes the inclination δ of the antenna 18 with respect to the base 23. By way of example, but without imposing limitations, the angle δ is the inclination of a flat surface outside the antenna 18.

The support 20 also comprises a tubular body 27 that has a longitudinal axis X1 with an internal cavity 28. The tubular body 27 extends to the rear of the box-shaped portion 24 and protrudes cantilevered inside the housing 10. Specifically, the tubular body extends along the longitudinal axis X inside the housing 10. The cavity 28 of the tubular body 27 faces inside the cavity 25 of the box-shaped portion 24 at a communication opening 29. The cavity 25 faces the outside of the tubular body 27 at a rear end 30. The tubular body 27 also comprises a flange 31 that protrudes radially outside the rear end 30. The shape and size of the flange 31 are variable. In particular, the flange 31 is oriented by a determined angle ε with respect to the base 23.

The camera 19 is fixed (according to the example shown, is screwed) to the flange 31. Therefore, the inclination of the flange 31 fixes the inclination γ of the optical axis O with respect to the base 23. Advantageously, the support 20 comprises a gasket 32, which is interposed between the camera 19 and the flange 31 and seals the tubular body 27 so as to prevent external liquids from entering inside the support 20 and, in particular, inside the cavity 28 of the tubular body 27 and/or the cavity 25 of the box-shaped portion 24.

The fin 7 also comprises a cap-shaped gasket 33 that is fitted on the lens 22. The gasket 33 is interposed between the lens 22 and the rear wall 14. Advantageously, the gasket 33 protects the lens 22 and prevents liquids from entering the shell 9 through the hole 15.

The base 23 of the support 20 preferably has a removable lid 34 arranged at the camera 19 so as to directly access to the installation area of the camera 19 within the housing 10. In this way, it is advantageous to have independent access from the antenna 18 to inside the camera 19 installation area.

Finally, the fin 7 comprises a camera 19 wiring 35, which in turn comprises a connector 36 and a cable 37. The connector 36 is inserted inside the tubular body 27 and is attached to the camera 19 near the rear end 30 of the tubular body 27. The cable 37 extends from the connector 36 to the outside of the housing 10 through an opening 38 made through the base 23.

The fin 7 further comprises a cable 39 extending from the antenna 18 to the outside of the housing 10 through the opening 38.

According to a variant not illustrated, the fin 7 does not have the camera 19. In this case, the shell 9 is intact and the hole 15 is closed.

Advantageously, the solution of the type described above enables both the SDARS antenna 18 and camera 19 to be integrated within a single unit (the fin 7).

Advantageously, the support 20 of the type described above enables the antenna 18 and camera 19 to be spaced a certain distance d1 apart, which is sufficient to prevent electromagnetic interference between the two devices.

Advantageously, the support 20 is configured to seal the chamber 21 of the antenna 18. This ensures the airtightness of the antenna 18 housing area, despite the presence of the hole 15 on the shell 9 to enable the positioning of the camera 19 lens 22.

Advantageously, the support 20 is configured to tilt both the antenna 18 and the camera 19 in a determined manner in order to achieve:
- a transmission field C1 dedicated to the emission and reception of signals by the antenna 18;
- a field of view C2 determined to best frame the rear of the vehicle 1 depending on the profile P and dimensions of the vehicle 1.

According to the schematisation shown in Figure 2, the transmission field C1 faces vertically upwards, while the field of view C2 faces along the longitudinal axis X to the rear of the vehicle 1.

Advantageously, the flap 16 allows the lens 22 of the camera 19 to be supported and to compensate for differences in inclination between the lens 22 and the rear wall 14; in particular, the flap 16 also has the purpose of making the profile of the fin 17 more harmonious by avoiding sharp edges and undercuts.

Advantageously, the solution of the type described above enables double coverage (by means of the shell 9 and by means of the box-shaped portion 24) of the antenna 18 and, therefore, greater protection thereof.

## Claims

1. A fin for a vehicle (1) having a bodywork (4); the fin (7) comprising a shell (9) configured to be fixed, in use, to the outside of said bodywork (4); the shell (9) having an inner housing (10); the fin (7) comprising an antenna (18), in particular a SDARS antenna (18), and a camera (19) installed inside the housing (10) of said shell (9).

2. A fin according to claim 1, wherein the shell (9) comprises a rear wall (14) having a hole (15), which puts in communication the inside of said housing (10) with the outside; wherein, the camera (19) comprises, in turn, a lens (22) configured to take pictures outside, in particular in the area behind the vehicle (1); wherein the lens (22) is positioned at said hole (15); in particular, the fin (7) comprising a gasket (33) of the cap type which is fitted on the lens (22) and is interposed between the lens (22) and the hole (15) so as to prevent the entry of matter, in particular liquids, inside the housing (10).

3. A fin according to claim 2, wherein the shell (9) is made by a single monolithic piece.

4. A fin according to any preceding claim, wherein the antenna (18) is inclined by a first angle (δ) determined with respect to a reference plane (π2); wherein, the camera (19) is inclined by a second angle (γ) determined with respect to the reference plane (π2); wherein, the antenna (18) and the camera (19) are spaced apart by a determined distance (d1) along a longitudinal axis (X).

5. A fin according to any preceding claim and comprising a support (20), which is installed inside said housing (10); wherein said support (20) has a sealed chamber (21), inside of which the antenna (18) is placed; wherein the camera (19) is installed outside the support (20).

6. A fin according to claim 5, wherein said support (20) is configured to fix the camera (19) and the antenna (18) inside of said housing (10); in particular, said support (20) is configured to keep the camera (19) and the antenna (18) spaced apart by said determined distance (d1).

7. A fin according to claim 5 or 6, wherein said support (20) comprises a base (23) which is fixed, in use, to the bodywork (4) of the vehicle (1); wherein, the support (20) is configured to fix the angular position of the antenna (18) and/or of the camera (19) with respect to the base (23).

8. A fin according to any claim from 5 to 7, wherein the support (20) comprises a box-shaped portion (24) having a cavity (25), which forms the chamber (21) housing the antenna (18) and has an opening communicating with the outside; wherein, the support (20) comprises a lid (38) that closes in a releasable manner said opening; wherein, the lid (38) comprises a thrust element (40), which protrudes inside the cavity (25) and is configured to keep the antenna (18) inclined by said first angle (δ) when it is fixed to the base (23).

9. A fin according to claim 7 or 8, wherein the support (20) comprises a tubular body (27) which protrudes from said box-shaped portion (24); the tubular body (27) is fixed to the box-shaped portion (24) by the front end and extends along a longitudinal axis (X) inside said housing (10); the tubular body (27) has a rear end (30), which protrudes overhanging inside said housing (10); the tubular body (27) comprising a flange (31), which protrudes radially outside said rear end (30); wherein the flange (31) is inclined by a determined angle (ε) with respect to the base (23); wherein said camera (19) is fixed to the flange (31); in particular, the fin (7) comprising a gasket (32), which is interposed between the camera (19) and the flange (31) to prevent the entry of matter, in particular liquids, inside the tubular body (27).

10. A vehicle having a bodywork (4) and comprising a fin (7), according to any preceding claim; wherein the fin (7) is fixed to the outside of said bodywork (4).
